# EUROPEAN PATENT SPECIFICATION

(11) **EP 3 829 149 B1**
(45) Date of publication and mention of the grant of the patent: **25.05.2022**
(21) Application number: 19863766.2
(22) Date of filing: 11.09.2019
(51) Int. Cl.: H04M 1/72454, G01S 11/14, H04M 1/60, G01S 3/808

(54) **AUDIO CONTROL METHOD AND DEVICE, AND TERMINAL**
AUDIOSTEUERUNGSVERFAHREN UND -VORRICHTUNG SOWIE ENDGERÄT
MÉTHODE ET DISPOSITIF DE COMMANDE AUDIO, ET TERMINAL

(30) Priority: 18.09.2018 CN 201811088106
(43) Date of publication of application: 02.06.2021
(73) Proprietor: Xi'an Zhongxing New Software Co. Ltd., Xi'an, Shaanxi 710119 (CN)
(72) Inventor: SHEN, Shaowu, Shaanxi 710119 (CN)
(74) Representative: Novagraaf International SA
(86) International application number: PCT/CN2019/105450
(87) International publication number: WO 2020/057419

(56) References cited:
- CN-A- 106 231 498
- CN-A- 106 412 287
- CN-A- 107 613 128
- CN-A- 108 184 023
- US-A1- 2010 277 579
- US-A1- 2011 274 293
- US-A1- 2013 202 130
- US-A1- 2017 238 109

## Description

### TECHNICAL FIELD

The present disclosure relates to the field of communication technology, especially an audio control method and device, and a terminal.

### BACKGROUND

Nowadays, scenarios for calls and audios of mobile terminals are becoming more and more complex, and mobile terminal producers and users are having increasingly higher requirements for audio performances of smart terminals. A user may make calls in various modes including a directly approaching mode, a wired headset mode, a wireless headset mode and a loudspeaker mode. Application scenarios thereof may be classified into two types: real scenes and virtual reality (VR). However, in various modes, various factors may cause damage to call sound quality, thereby a user's hearing experience is affected.

US 20130202130A1 and US 20110274293A1 disclosed methods for performing audio quality adjustment according to a movement state parameter in related art.

### SUMMARY

The present disclosure provides an audio control method and device, and a terminal, capable of improving sound quality of calling between users.

The invention is set out in the appended set of claims.

Compared with existing technologies, the present disclosure provides a technical solution including: determining a movement state parameter; wherein a position change of the user with respect to a terminal is obtained according to an audio signal acquired by an MIC, and a corresponding movement state parameter is determined according to the position change; and performing corresponding audio quality adjustment according to the movement state parameter. The solution of the present disclosure ensures that the terminal can perform a real time monitoring according to a distance of the user from an MIC or an earpiece, an included angle with respect to an audio reception region, distance information, and changes in use environment, call mode and movement state. Further, self-adaptive audio compensation algorithm control adjustment can be made without needing to constantly adjust volume by means of side buttons, thereby improving call sound quality experience of the user.

### BRIEF DESCRIPTION OF THE DRAWINGS

The drawings for the embodiments of the present disclosure will be described in the following. The drawings for the embodiments are for further understanding the present disclosure by further explaining the present disclosure, rather than to constitute a limitation to the protection scope of the present disclosure.
FIG. 1 is a flowchart of an audio control method according to an embodiment of the present disclosure.
FIG. 2 is a schematic block diagram of an audio control device according to an embodiment of the present disclosure.
FIG. 3 is a schematic diagram of an operation principle of a silicon MIC according to an embodiment of the present disclosure.
FIG. 4 is a schematic diagram of a Doppler audio detection according to an embodiment of the present disclosure.
FIG. 5 is a schematic diagram of call detection in different directions according to an embodiment of the present disclosure.
FIG. 6 is a schematic diagram of a terminal having a MIC array of a plurality of MICs according to an embodiment of the present disclosure.
FIG. 7 is a layout diagram of a plurality of sound reception MIC arrays and a single-pole multi-throw switch according to an embodiment of the present disclosure.
FIG. 8 is a schematic diagram of an application scenario of virtual reality according to an embodiment of the present disclosure.
FIG. 9 is a schematic diagram of acquiring an angle in a near-field and a far-field environment according to an embodiment of the present disclosure.
FIG. 10 is a schematic diagram of a device for charge induction measurement according to an embodiment of the present disclosure.
FIG. 11 is a flowchart of an audio control method according to an embodiment of the present disclosure.

### DETAILED DESCRIPTION

In order to facilitate understanding by those having ordinary skill in the art, the present disclosure will be further described with reference to the drawings. The drawings do not limit a protection scope of the present disclosure. It is to be noted that embodiments in the present disclosure may be combined to derive other embodiments not explicitly described.

The inventor finds that, for a mobile terminal, in the directly approaching mode, if the user is in motion during a call, audio reception may be affected and it would be difficult to guarantee a clear and constant call sound performance. For example, when the user is in motion, a distance between the mouth and an MIC changes. If the mouth is getting away from the MIC, an other party of the phone call would hear lower sound; if the mouth is getting too close to the MIC, the other party would hear too loud a sound. If positions of a head (the ear and mouth) of the user and the MIC change frequently, the other party of the phone call would hear a sound with a loudness changing abruptly, thereby the user's hearing experience is affected. If the other party is too loud, not only the user would feel harsh in the ear but hearing of the user would be damaged after a long time. Besides, an audio gain that is too high would increase power consumption. In addition, a sound that is too loud would be heard by others, resulting in information divulging.

In a loudspeaker or video phone mode, when the user uses the loudspeaker in a call or uses a video phone, instead of the approaching mode, there is some distance between the user and the phone, which is a distant field mode of audio. If the distance between the mouth of the user and the MIC of the phone changes, the other party would hear a sound of changing loudness, thereby sound quality and consistency would be affected.

In a virtual reality scenario of a phone, we would like to hear a stereo sound. However, it is difficult to generate a stereo sound by receiving sound using a MIC, and can not result in a stereo immersion effect of audio.

In addition, traditional volume adjustment needs to be controlled by a side volume key or by turning on a volume adjustment window on a screen, which is not flexible and it is difficult to realize a diversified application scenario.

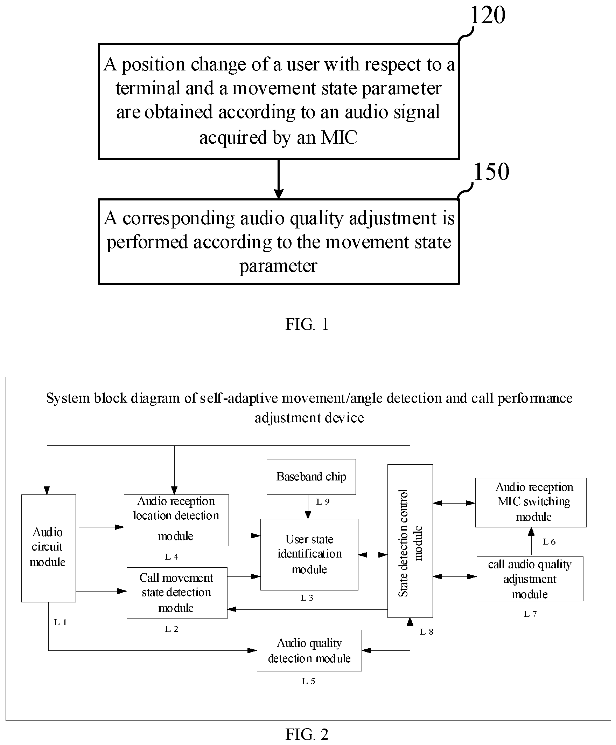

As shown in FIG. 1, an embodiment of the present disclosure provides an audio control method including the following steps.

In step 110, it is determined whether an enabling condition of audio quality adjustment is satisfied.

The enabling condition includes at least one of the following conditions:
a first enabling condition is whether a control function of the audio quality adjustment is enabled by a user; and
a second enabling condition is whether a terminal state satisfies a triggering condition.

Whether the terminal state satisfies the triggering condition includes at least one of the following.

Whether a current call mode of the terminal satisfies a preset triggering call mode.

Herein, call modes of the terminal includes: a directly approaching mode, a wired headset mode, a wireless headset mode, a loudspeaker mode and a VR mode and the like. In some examples, the preset triggering call mode is set as the loudspeaker mode. This is because in the loudspeaker mode, adjustment is generally required to be performed according to a user's position, while in the other modes, a change in position of the user does not prominently affect call quality. For example, in the wired headset mode, call quality is stable due to a relatively fixed position therebetween and it is not necessary to trigger audio quality adjustment performed according to a position change.

(2) Whether a current movement mode of the terminal satisfies a preset triggered movement mode.

Herein, concerning a movement mode of the terminal, it may be detected whether the terminal is in a movement state through an acceleration sensor or a gyroscope. If the terminal is in the movement state, it is considered that the triggering condition is satisfied. If the terminal is in a relatively static state, it is considered that the triggering condition is not satisfied. For example, when the user is walking or running, the phone is also moving, and it is necessary to perform audio quality adjustment according to the position change. However, when the phone is in the relatively static state, generally, it is not necessary to perform audio quality adjustment according to the position change. Therefore, the static state is set as not satisfying the triggering condition.

(3) Whether audio quality of the terminal is deteriorating and the change is not related to a current network state of the terminal.

Particularly, a change in current audio quality is detected. Herein, the change in audio quality includes changes in volume and sound quality. It is determined whether it is necessary to enable a corresponding audio state adjustment control according to an obtained position change and the change in the current audio quality. Herein, if a relative position of the user with respect to the phone does not change while the change in the audio quality is detected, the audio state adjustment control is not enabled. If the relative position of the user with respect to the phone changes while the change in the audio quality is detected, the audio state adjustment control is enabled.

If it is monitored that a current call quality is poor, which is not caused by movement of the user position or a user direction, but caused by weakness of a current network signal, it is not necessary to perform the audio quality adjustment according to a change in position. Therefore, this case is set as not satisfying the triggering condition.

A third enabling condition is whether a user action state satisfies the triggering condition.

The user action state refers to whether the user is getting close to or away from the phone, whether the relative position of the user with respect to the phone changes, whether a distance or direction between a mouth and ear of the user and a microphone and earpiece changes.

In step 120, when the enabling condition is satisfied, according to an audio signal acquired by an MIC, a position change of a user with respect to a terminal and a movement state parameter are obtained.

Herein, the position change of the user with respect to the terminal and the movement state parameter are obtained in step 120 include the following.

In step 121: a specific audio signal is transmitted from a loudspeaker, and a corresponding specific audio signal is acquired by the MIC.

In step 122: computing a corresponding frequency change value of an acquired particular audio signal;
In step 123: filtering is performed and two or more frequency signals are extracted;
In step 124: extracted frequency signals are compared with a frequency value of a system model signal.

A system model refers to a comparison value of a characteristic audio signal frequency with respect to a relative movement state of a user with respect to a phone, and is a mapping table set. A frequency value is pre-stored in a system. The mapping table set is obtained based on big data. An acquiring process of the big data is to simulate a user sending a specific audio signal to the phone. Through a time domain and frequency domain conversion, the audio signal is converted to a corresponding frequency change value. And after being filtered through a Doppler detection process, a corresponding frequency value is extracted. One group of being close or distant is acquired under each distance. Thereafter, an average value is given for most users, and a valid threshold range is limited. In addition, in a case where application of a current mapping table set is insensitive, a frequency value of a system module signal may be corrected, and may be stored as a characteristic system module value according to a corrected parameter.

In step 125: a user position change result is determined according to a comparison result.

In step 130: a movement state parameter is obtained according to a position change of the user with respect to the terminal.

In step 150: a corresponding audio quality adjustment is performed according to the movement state parameter.

Before the step 150, the method further includes a step 140, where a current audio reception MIC is determined when the terminal includes a plurality of MICs for audio reception.

Specifically, for each respective audio reception MIC, a Doppler shift is obtained, and one or more MICs with a greatest Doppler shift is set as the current audio reception MIC.

For example, an audio reception MIC with a maximum value of the Doppler shift is determined, and audio reception is performed by the audio reception MIC corresponding to the maximum value of the Doppler shift. Alternatively, two audio reception MICs with the greatest Doppler shift are determined and audio reception is performed by the two audio reception MICs.

Alternatively, a slight charge change between a position of the terminal and a plane of a person's mouth, ear or face is measured to determine whether a position change occurs of the terminal with respect to a human body. For example, the terminal is divided into a plurality of charge measuring regions including a lower section, an upper section, a bottom section and a side section. Each charge measuring region corresponds to a different audio reception MIC. A charge measuring region closest to a user's sound part is determined through charge measuring, and an audio reception MIC corresponding to the closest charge measuring region is used for performing audio reception. Herein, the sound part specifically refers to a mouth area. Since a human body has a certain dielectric constant, and dielectric constants at different parts of the human body are different because skeletons, water, muscle, fat and protein take different percentages in an organ. Therefore, the mouth area may be distinguished from other parts due to different reflected charge amount.

When charge amount in a charge measurement region increases in a sudden, the region is determined as a charge measurement region closest to the user.

With reference to FIG. 2, the present disclosure provides a communication device including: an audio circuit module L1, a call movement state detection module L2, a user state identification module L3, an audio reception location detection module L4, an audio quality detection module L5, an audio reception MIC switching module L6, a call audio quality adjustment module L7, a state detection control module L8 and a baseband chip L9.

The audio circuit module L1 includes a loudspeaker (SPEAKER), a microphone (MIC) and an audio coding and decoding chip. The loudspeaker is configured to generate and receive an audio signal, and the MIIC is configured to generate an audio signal. In this embodiment, the speaker and the microphone may be of one or more groups for improving audio quality of a call and audio reception. The audio circuit module L1 is mainly configured to generate and receive a call voice signal.

The call movement state detection module L2 is connected with the audio circuit module L1 for detecting a movement state of the user during a call based on the audio Doppler principle. The movement state includes: being away from the terminal during speaking, being close to the terminal during speaking, being away from the terminal during listening and being close to the terminal during listening. Specifically, the call movement state detection module L2 is configured to detect a change in position of the current user with respect to the phone and a change of a user movement state, thereby a movement state parameter corresponding to the change of the user movement state is obtained.

During a call process, a state of the user per se, for example, the mouth and ear at the head, is not relatively static but is frequently moving near and far from the microphone and telephone receiver; and movement may be intentional. Besides, when the user is in a call while walking or running, a amount of change in distance between the mouth and the microphone/telephone receiver may be greater.

For the user per se, during listening, a movement of a position of the earphone may lead to instability of audio reception and even unclearness of audio reception. During speaking, a movement in position of a speaker would result in unevenness of sound received by an other party, and thereby would result in unclearness of audio reception. The call movement state detection module L2 may detect in real time a change in position of the current user with respect to the phone and a change in the state. A change in a relative position refers to detecting whether the user is approaching or getting away from the phone, thereby a corresponding control module may perform a self-adaptive sensing control.

A detection principle of the call movement state detection module L2 is as follows. If a sound wave source and a receiver move toward each other, a sound wave is compressed, thereby a wave length of the sound wave is decreased and a frequency of the sound wave is increased. If the sound wave source and the receiver move away from each other, the sound wave is stretched, thereby the wave length is increased and the frequency is decreased. When the microphone of the phone moves close to the sound wave source , the number of sound wave pulses received by the microphone within a unit time period increases. When the microphone of the phone moves away from the sound wave source, the number of sound wave pulses received by the microphone within the unit time period decreases. When the user is in the call, low-frequency or high-frequency audio call signals with respect to a certain frequency may be generated, and a corresponding microphone on the terminal may receive and modulate the signals. When the user moves with respect to the microphone on the phone, an audio waveform frequency received by the microphone changes.

Specifically, when the mouth of the user is getting close to the microphone, a frequency of a received audio signal increases due to a Doppler effect. When the mouth of the user is getting away from the microphone, a frequency of a received audio signal decreases due to the Doppler effect.

If it is assumed that the user and the microphone are in a straight line, a formula thereof is *f* = *f₀*(*u* + *v*1)/(*u*-*v*2), wherein f denotes a specific audio signal frequency sound by the user, f0 denotes an audio signal frequency received by the microphone, u denotes a sound speed in the user terminal environment, v1 denotes a movement speed of the microphone, and v2 denotes a movement speed of the user. If the microphone is static, v1 is 0, and the formula may be simplified as *f* = *f*₀*u*/(*u*-*v*2). When the user moves to the microphone, V2 is a positive value and f>f0. When the user moves away from the microphone, V2 is a negative value and f<f0. When a distance between the microphone and the user stays unchanged, a sound wave frequency received by the microphone is equal to a sound wave frequency generated by the user.

A detection process of the call movement state detection module L2 includes: computing a corresponding frequency change value of a collected specific audio signal; performing filtering and extracting two or more frequency signals; comparing extracted frequency signals with a frequency value of a system model signal; and outputting an output to the user state identification module L3.

The call movement state detection module L2 receives an acquired specific audio signal which is converted to a corresponding frequency change value through a time domain and frequency domain conversion. After being filtered through a Doppler detection process, frequency noise of the outside environment is eliminated. A noise with an irregular frequency beyond a threshold scope is then eliminated, and two or more frequency signals are extracted. If a frequency value changes compared with a frequency value emitted initially, the frequency value is then compared with a frequency value of the system model signal. A result is output to the user state identification module.

For a sound wave of a fixed frequency generated by the user, a sound wave signal frequency received by the microphone may include a glitch, i.e., a clutter signal of other frequencies, due to interference of an outside environment or other noises. Therefore, in order to facilitate a final state identification and determination, the frequency signal received by the microphone needs to be filtered to extract a valid identifiable frequency signal. The filtering may be realized by adding a plurality of groups of bandpass filters.

Because the signal characteristics in a time domain of the sound waveform are not obvious, the microphone performs a fast Fourier algorithm to filter a received audio time domain signal before converting into a frequency domain signal. By increasing the number N of sampling points, a resolution of the frequency can be obtained as F/N. The larger the number of points, the higher the resolution of the sample.

The user state identification module L3 is connected to the call movement state detection module L2, a self-adaptive state control module L4, the state detection control module L8 and the baseband chip module L9 to detect a current movement state and application environment state of the terminal.

The user state identification module L3 receives an acquired value from the call movement state detection module L2, compares the acquired value with a threshold range of a pre-stored parameter model of the system, and obtains the movement state of the current user according to a comparison result. A detection result of the movement state is notified to the state detection control module L8 so that the state detection control module L8 may enable corresponding audio quality adjustment.

Herein, when the acquired value is within a certain threshold range, it is determined that the user is in a movement state corresponding to the threshold range.

The user state identification module L3 may perform comparing, determining and identifying of the user's movement state, for example, as being close or being away with respect to the terminal, or where the listening part or sound part of the user currently is, or whether the user's mouth moves left or right and up or down with respect to the MIC and so on.

The user state identification module L3 acquires current audio parameter data of the phone, and performs corresponding calculation and conversion. If the data matches a typical movement model parameter stored in the state detection module, the user's movement state may be determined accurately.

The user state identification module L3 is further configured to detect which call mode (for example, a direct mode, the wired headset mode, the wireless headset mode, the loudspeaker mode and the VR mode and the like) the phone is currently at by detecting an operation state of each interface of the baseband chip module L9, thereby a call state identification is realized through different ports and functional detection.

The user state identification module L3 may further acquire network quality report information from the baseband chip module L9. Strength of a phone signal is also closely related to call quality. If signal strength is full, the call quality is clear. If a communication signal network is poor, sound heard would be intermittently blurred. If a monitored poor call is not caused by a user position or directional movement but by a weak network signal, sound signal quality may be adaptively adjusted under different networks, and thus a user's experience may be greatly improved.

The user state identification module L3 may further acquire setting information of an operation mode of the phone, for example, a meeting mode, an outdoor mode, a sleep mode and the like, and may perform a real time audio output adjustment according to these modes. For example, if a user A receives a call during a meeting, the call cannot be too loud for fear of interrupting others in the meeting. In this case, the user movement state is in the meeting mode and the control module would use a high-gain audio reception mode.

The audio reception location detection module L4 is connected to the audio circuit module L1 and the user state identification module L3 respectively to detect a real time change of the mouth with respect to a position of audio reception of the MIC during the call.

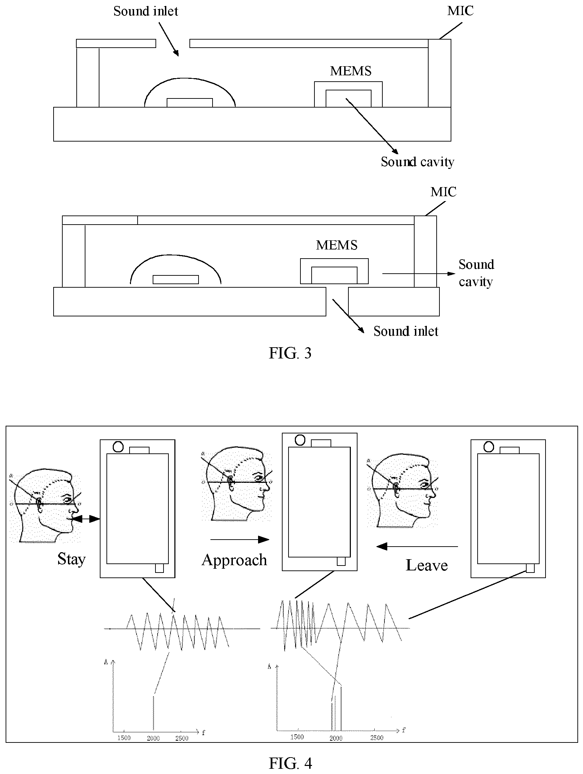

In the terminal, audio reception is generally performed by an MIC. Single MIC and double MICs are common. In the double MICs, one MIC is configured for audio reception of a user, while the other one is configured for audio reception of background noise to realize noise reduction. A common silicon MIC is taken as an example. As shown in FIG. 3, when the user is in a call, a certain sound stream would be caused. A sound-inlet hole corresponding to the silicon MIC receives the stream. A silicon diaphragm and a silicon backplane are set in the MIC to form a miniature capacitor. The silicon diaphragm may sense changes in sound pressure and convert the sound pressure into capacitance change values. An ASIC chip set in the MIC further converts the capacitance into electrical signals. The MIC may further be divided into two types: upper sound inlet and lower sound inlet according to a position of the sound inlet, as shown in FIG. 4. When the user's mouth is getting away from the sound inlet during a call, a sound signal received by the phone changes.

When a single person is in a call, the microphone receives an audio with a single frequency. When a plurality of persons are in a call, the audio received by the microphone are of a plurality of frequencies. If the frequency is a single frequency, the microphone is adjusted as that only an MIC in a certain direction is enabled. If the frequency is of a plurality of frequencies, a plurality of MICs are enabled to perform audio reception throughout the entire region.

If it is detected that a Doppler frequency shift of a frequency received by a certain MIC is greater than that of another MIC, it indicates that this receiving position is sensitive, and the position may be switched to for audio reception. Alternatively, a plurality of MICs may be applied for audio reception.

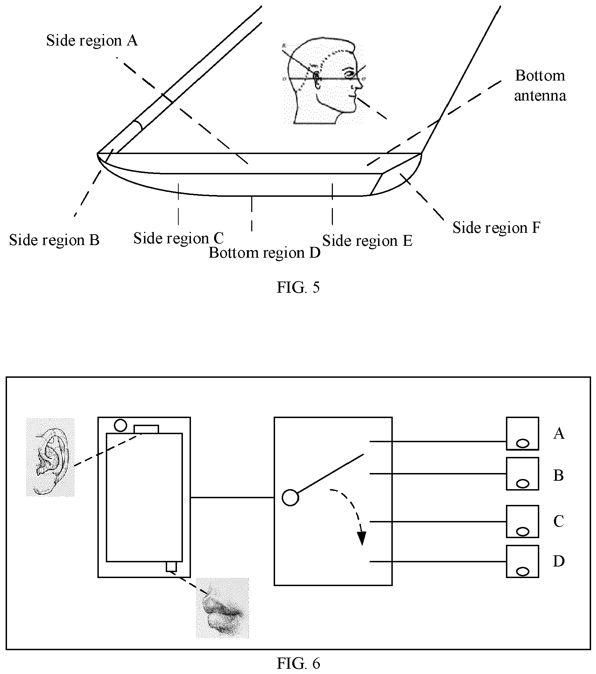

As shown in FIG. 5, an antenna in the terminal includes a 2G/3G/4G cellular antenna, WIFI and Bluetooth, and a GPS antenna, etc. The antenna component modules are distributed at the four corners or sides of the phone, and a strip-line is connected to each channel of a charge sensing circuit. The charge sensing circuit completes acquisition of a small amount of charge changes in each region. The circuit consists of a sensitive charge acquisition circuit. The antenna and a metal unit of the terminal are taken as a reference plane. A human body contacting the terminal is taken as a sensing plane. By measuring a change of a small amount of charge between a position corresponding to the terminal and a human mouth, ear or face, it may be determined whether the position of the human body with respect to the terminal changes. The module has a charge rod circuit that continuously radiates a small amount of charge signals to the outside. When the radiated charge signals encounter an obstacle, some may be reflected back. The amount of reflected signals is affected by a distance from the obstacle and a projection area. The sensing circuit then acquires the amount of reflected charges, and converts the charges through analog-digital conversion into a corresponding digital signal value to be stored in a corresponding register.

A particular operation process is: when a region (a lower region, an upper region, a bottom region or a side region) of the terminal gets away from a certain sound part of the human body, an amount of charges acquired by the circuit is greatly decreased. When a region of the terminal gets close to a certain sound of the human body, an amount of charges acquired by the circuit is greatly decreased, and a changed charge amount may reach a certain level.

Through a control setting, a sensing distance ranges from 0 mm to 2m. A specific distance is determined by a digit in the charge sensing circuit and an analog gain amplifier. The greater a gain, the greater the distance that may be detected. By adjusting sensitiveness within a detectable range of distances, detection control of different distances may be identified. Antennas at respective angle and direction of the terminal or another metal coupling unit and the charge sensing circuit form a star-type network connection, i.e., multiplexing synchronous detections may be realized. If the terminal is divided into six audio reception regions, A, B, C, D, E and F, an angle and direction value of a speaker or microphone of a current terminal with respect to the human face, ear or mouth may be obtained by calculation, through a charge change detection in a bottom antenna sensing region of the terminal during an approaching process between the human mouth and the microphone.

Herein, a frame of a phone is divided into several regions, and each region is defined as an induction channel. If a certain part of a human body approaches this region, a charge induction value on the channel may change. A specific approaching direction and angle may be determined through a mapping relationship between a charge value and the channel.

If the user contacts only one region of the frame of the phone, this change may be a change of a charge value of one channel. If the user contacts two regions of the frame of the phone, the charge value of the two channels may be changed, and a corresponding direction and position may be calculated through a triangular relationship.

The audio quality detection module L5 is configured to detect change in audio quality of the phone, which includes two kinds of changes: volume change and sound quality change. When the user is in a call, if a relative position of the user with respect to an audio transceiver of the terminal changes, audio signal quality detected by the phone changes. If it is detected that the relative position of the user with respect to the phone changes while the audio signal is changing, a corresponding audio state adjustment control needs to be enabled. If it is detected that the relative position of the user with respect to the phone does not change while an audio signal quality is changing, an audio quality adjustment control may not be performed.

The audio reception MIC switching module L6 is connected to a volume adjustment control module for selection and switching of the MIC during audio reception. Herein, the selection and switching are performed through an MIC array and a single-pole multi-throw switch. During a call, when the user's mouth is approaching or getting away from the sound inlet hole, a sound signal received by the phone changes.

When a single person is in a call, the microphone receives an audio with a single frequency. When a plurality of persons are in a call, the audio received by the microphone are of a plurality of frequencies. If there is a single frequency, the microphone is adjusted as that only one MIC at a certain direction is enabled. If there are a plurality of frequencies, a plurality of MICs are enabled to perform audio reception for entire region. As shown in FIG. 6, an array with four MICs, A, B, C and D are set on a phone. If it is detected that the user's mouth is approaching the region A, an MIC A is taken as an audio reception device. If it is detected that the user's mouth is approaching the region B, a MIC B is taken as an audio reception device. If it is detected that the user is far away from the phone, the plurality of MICs may be selected to work synchronously to achieve an effect of increasing audio reception.

The call audio quality adjustment module L7 is configured to adjust and control sound received and transmitted by the phone. Specifically, volume or a reception mode is adaptively controlled and adjusted according to current audio quality, a movement state change and a call mode change.

The loudspeaker of the phone is taken as an example. When it is detected that the user is getting away from the phone, the adjustment module may increase the volume of the loudspeaker of the phone as needed. When it is detected that the user is getting close to the phone, the adjustment module may decrease the volume of the loudspeaker of the phone as needed.

MIC detection is taken as an example. When it is detected that the user is getting away from the phone, the adjustment module may switch to a corresponding MIC channel as needed and increase a volume of a sound received by the phone. When it is detected that the user is getting close to the phone, the adjustment module may switch to a corresponding MIC channel as needed and decrease the volume of the phone.

If the user uses the loudspeaker mode, as there is a distance between the user's head and the phone, when it is detected that the user's head is getting away from the phone, the adjustment module may increase the volume of a sound received by the phone as needed while increasing a volume of the loudspeaker. When it is detected that the user's head is getting close to the phone, the adjustment module may decrease the volume of received sound as needed while decreasing a volume of the loudspeaker.

Through the above adaptive adjustment of the audio quality, the audio quality of the phone keeps within a certain range that is neither distorted nor saturated. Further, the user's call quality would not be affected by a movement state, a relative position or a call mode.

The state detection control module L8 is connected to respective module for state detection, triggering modules and coordination control over each detection module, and is further configured to control turn-on and turn-off of each related module and other coordination control.

The module further includes a detection triggering mechanism including two input detections, i.e., an audio quality detection and a phone state detection. Firstly, concerning real time detection of audio quality, during a call, the detection is not enabled until there is an amplitude change or a quality change of the audio signal. Secondly, auxiliary detection is performed through a sensor (for example, a gyro or an acceleration sensor) set within an audio setting of the phone to determine whether to enable a state detection device. If the terminal is static, the above sensor does not operate, and the state detection control module does not enable each related state detection operation module. The state detection device does not operate unless the terminal is in a movement state and one sensor as described above works.

The baseband chip module L9 is connected to a user state identification module L3 to detect an operation state and control of respective interface module of the phone. The baseband chip module is configured to detect which call mode (for example, the direct mode, the wired headset mode, the wireless headset mode, the loudspeaker mode and the VR mode and the like) the phone is in, thereby a call state identification is realized through different ports and functional detection.

A further description is made through a particular implementation scenario as follows.

FIG. 4 is a schematic diagram of the Doppler audio detection. The detection terminal may include one or more MIC or SPEAKER module. Each audio generation or reception module is disposed at different positions of a phone. A group of MIC and SPEAKER is taken as an example. When the mouth of the user and the microphone are getting closer to each other, a frequency of a received audio signal may increase due to a Doppler effect. When the mouth of the user and the microphone are getting away from each other, a frequency of a received audio signal may decrease due to the Doppler effect.

FIG. 5 is a schematic diagram of call detection in different directions. As shown in FIG. 3, the terminal is divided into a plurality of audio reception regions, for example, six audio reception regions, A, B, C, D, E and F. Each audio reception region is implemented through a hole oriented to different directions at the bottom or top of the phone. By detecting a frequency change tendency and a frequency value in different reception directions, it is judged which direction a user's sound is oriented and thereby which MIC is to be configured as a main reception MIC.

In addition, an angle and direction of a microphone or loudspeaker of the current terminal with respect to the face, ear, and mouth of the user may also be computed by detecting a change in charge amount at the antenna sensing area at the bottom of the terminal, during approaching of the user's mouth and the microphone, thereby an audio and reception channel adjustments are performed.

As shown in FIG. 6, an array of four MICs, A, B, C and D is arranged on the phone. If it is detected that the user's mouth is approaching region A, it is determined that the MIC A is taken as an audio reception device. If it is detected that the user's mouth is approaching the region B, the MIC B is taken as an audio reception device. If it is detected that the user is far away from the phone, a plurality of MICs may be selected to work synchronously to achieve an effect of increasing audio reception.

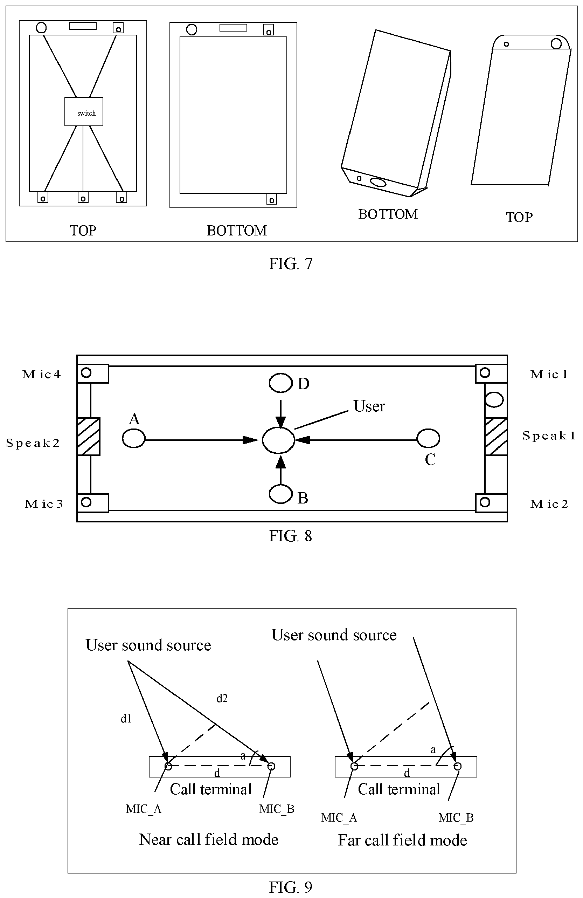

FIG. 7 is a layout diagram of a MIC array with a plurality of sound-reception MICs and a single-pole multi-throw switch.

Description is made with reference to an audio detection and adjustment scenario in virtual reality.

In a virtual reality scenario of a phone, we would like sound we hear to be stereo, i.e., a directional sound. In a normal audio mode of the phone, sound comes from a SPEAKER module of the phone. In this way, there would be no time difference between a sound heard by the left ear and a sound heard by the right ear, which would otherwise form no stereo sound. When the user is speaking to the phone, generally only one MIC is used for audio reception, but the other party connected through the phone does not know a position of the speaker. In application of virtual reality, we would hope that parties in a call, game or meeting may sense a current direction of the speaker. If a sound source direction can be changed as a position of the speaker changes, a good audio stereo immersion effect may be realized.

FIG. 8 shows four persons A, B, C and D. Through a 3D protection, virtual stereo images of the four persons may be seen. However, a sound source of the audio is generally static. Herein, if the sound source can be changed as a speaker's position changes, for example, when the speaker moves from the left to the right, and a listener in the middle can feel that the sound source has switched from the left to the right, thus a good audio stereo immersion effect may be realized.

In this device, a receiving array is formed by two or more MICs placed on a phone or a call terminal. The direction of the sound source of the other party's audio transmission is sampled. Further, a Doppler frequency offset is used for calculation to determine whether the speaker is getting close to or distant from the terminal, and an angle when being close or distant. For the receiving party, the terminal device acquires and demodulates the above-mentioned audio information, transmits and outputs the demodulated audio information through different SPERKERs, and adjusts dynamic audio information according to an acquired Doppler frequency shift, so that an audio receiver may feel an audio information that has a direction and a distance, thereby a direction, angle and distance of the speaker can be determined.

Specifically, as shown in FIG. 9, based on a varied distance between the speaker and the terminal, a call sound source may be classified into two types: a near field-type and a far field-type. In the near field environment, e.g., the user is in a call mode of being directly approaching, a sound wave may be transmitted in the form of spherical waves. In the far field, e.g., the user is in the loudspeaker mode, a sound wave may be transmitted in a plane wave form. A time delay difference between two sound waves is computed, and the time delay difference is multiplied by 340m/s, to obtain respective distances d between a current speaker and two microphones. Further, an included angle a of the speaker with respect to the two microphones (i.e., a direction of the speaker) is obtained through the following geometric modeling. Herein, a trigonometric operation is performed for three distance values to obtain the included angle a. The included angle a is an angle of the speaker with respect to the two microphones, i.e., an azimuth angle of the speaker.

In the following, description is made through an example of an angle detection device structure.

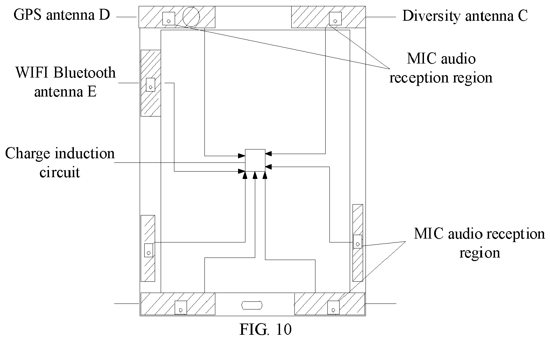

FIG. 10 is a schematic diagram of a device for charge induction measurement according to an embodiment of the present disclosure. An antenna in the terminal includes a 2G/3G/4G cellular antenna, WIFI and Bluetooth, and a GPS antenna, etc. The antenna component module is distributed at the four corners or sides of the phone respectively. When a region (a lower region, an upper region, a bottom region or a side region) corresponding to the terminal gets away from a certain sound part of a person, the charge amount acquired by the circuit greatly decreases. When a region corresponding to the terminal gets close to a certain sound part of a person, the charge amount acquired by the circuit greatly decreases.

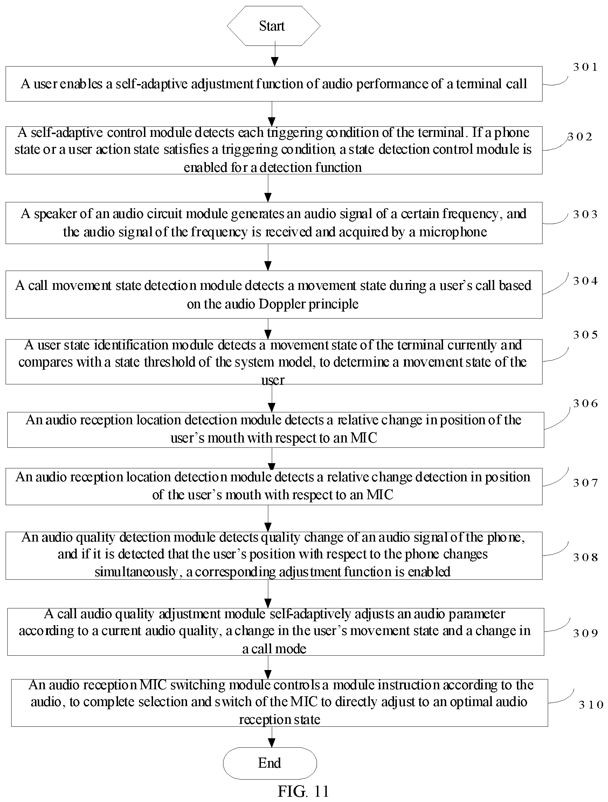

FIG. 11 shows an operation flow of a detection and adjustment device of the mobile terminal of the present disclosure. As shown in FIG. 11, an audio control method provided in the embodiment of the present disclosure includes the following steps.

In step 301, a user enables a self-adaptive adjustment function of audio performance of a terminal call.

In step 302, a self-adaptive control module detects each triggering condition of the terminal. If a phone state or a user action state satisfies a triggering condition, a state detection control module is enabled for a detection function.

In step 303, a speaker of an audio circuit module generates an audio signal of a certain frequency, and the audio signal of the frequency is received and acquired by a microphone.

In step 304, a call movement state detection module detects a movement state during a user's call based on the audio Doppler principle.

In step 305, a user state identification module detects a movement state of the terminal currently and compares with a state threshold of the system model, to determine a movement state of the user.

In step 306, an audio reception location detection module detects a relative change in position of the user's mouth with respect to an MIC.

In step 307, an audio reception location detection module detects a relative change detection in position of the user's mouth with respect to an MIC.

In step 308, an audio quality detection module detects quality change of an audio signal of the phone, and if it is detected that the user's position with respect to the phone changes simultaneously, a corresponding adjustment function is enabled.

In step 309, a call audio quality adjustment module self-adaptively adjusts an audio parameter according to a current audio quality, a change in the user's movement state and a change in a call mode.

In step 310, an audio reception MIC switching module controls a module instruction according to the audio, to complete selection and switch of the MIC to directly adjust to an optimal audio reception state.

Traditional volume adjustment needs to be controlled by a side volume key or by turning on a volume adjustment window on a screen, which is not flexible and it is difficult to realize a diversified application scenario. During a call, there may be a condition of inconvenience. As non-side-key terminals are increasing, it is a problem as to how to perform a simple self-adaptive adjustment to a call volume without a side key. The audio control method provided in this embodiment may be applied to a non-side-key terminal application scenario, in which self-adaptive adjustment is implemented without a side key.

Based on an identical or similar conception to the above embodiment, an embodiment of the present disclosure further provides an audio control device disposed in a terminal. The device includes a user state determining unit and an adjusting unit. The user state determining unit is configured for determining a movement state parameter; wherein a position change of a user with respect to a terminal is obtained according to an audio signal acquired by an MIC, and a corresponding movement state parameter is determined according to the position change. The adjusting unit is configured for performing corresponding audio quality adjustment according to the movement state parameter.

In an embodiment of the present disclosure, the device further includes an enabling unit configured to confirm whether an enabling condition for audio quality adjustment is satisfied before determining a user state. In a case where the enabling condition of the audio quality adjustment is satisfied, the user state determining unit is notified to implement the process that a change in position of the user with respect to the terminal is obtained according to the audio signal acquired by the microphone MIC, and the user state is determined according to the position change.

In this embodiment, the enabling condition includes at least one of the following conditions:
whether the user enables a control function of the audio quality adjustment;
whether a terminal state satisfies a triggering condition; and
whether a user movement state satisfies the triggering condition.

In this embodiment, the enabling condition further includes: detecting a change in current audio quality including a change in volume and a change in quality; determining whether it is necessary to enable a corresponding audio state adjustment control according to an obtained position change and the change in the current audio quality. It is determined that the enabling condition is not satisfied if information indicated by a position change parameter is that a position of the user with respect to a phone stays unchanged while the change in an audio quality is detected. It is determined that the enabling condition is satisfied if the information indicated by the position change parameter is that the position of the user with respect to the phone changes while the change in the audio quality is detected.

In this embodiment, that the user state determining unit obtains a position change of the user with respect to the terminal includes: transmitting a specific audio signal from a loudspeaker, and acquiring a corresponding specific audio signal through the MIC; computing a frequency change value corresponding to an acquired specific audio signal; performing filtering and extracting two or more frequency signals; comparing the extracted frequency signals with a frequency value of a system model signal; and determining a user position change result according to a comparison result.

In this embodiment, that the user state determining unit determines the movement state parameter includes: comparing an obtained position change result with a model set of a preset and stored typical movement state parameter to determine a movement state parameter.

In this embodiment, the movement state parameter determined by the user state determining unit includes at least one of the following parameters:
a parameter indicating being away from a terminal while the user is speaking, a parameter indicating being close to the terminal while the user is speaking, a parameter indicating being away from the terminal while the user is listening, or a parameter indicating being close to the terminal while the user is listening; and
a parameter indicating that a sound part of the user moves to the left, right, up or down with respect to the MIC.

In this embodiment, that the adjustment unit performs corresponding audio quality adjustment according to the movement state parameter includes: determining a current audio reception MIC when the terminal includes a plurality of MICs for audio reception.

In this embodiment, that the adjustment unit determines the current audio reception MIC includes: obtaining a Doppler shift corresponding to each audio reception MIC, and setting one or more MICs with a greatest Doppler shift as the current audio reception MIC; or, dividing the terminal into a plurality of charge measuring regions respectively corresponding to different audio reception MICs, determining a charge measuring region closest to a sound part of the user through charge measuring and setting an audio reception MIC corresponding to the closest charge measuring region as the current audio reception MIC.

In an example of this embodiment, before performing corresponding audio quality adjustment, the following is further included: acquiring network quality information.

According to the user state, the performing corresponding audio quality adjustment includes: increasing or decreasing a gain of audio reception according to strength of a signal in the network quality information.

In an example of this embodiment, before performing corresponding audio quality adjustment, the method further includes: acquiring configuration information of an operation mode of the phone.

The performing corresponding audio quality adjustment further includes: increasing or decreasing a gain of audio reception according to the configuration information of the mode of the phone.

In an example of this embodiment, before the performing corresponding audio quality adjustment, the following is further included: determining whether an application scenario is virtual reality; and obtaining location information of a current speaker when it is determined that the application scenario is virtual reality.

The performing corresponding audio quality adjustment further includes: obtaining a loudspeaker corresponding to the location information, and switching the loudspeaker to be a current loudspeaker. Based on a conception identical or similar to the above embodiment, an embodiment of the present disclosure further provides a terminal including any one of the audio control devices provided in embodiments of the present disclosure.

Based on a conception identical or similar to the above embodiment, an embodiment of the present disclosure further provides a terminal including a memory, a processor and a computer program stored on the memory and operable on the processor. The processor, when executes the computer program, performs a process of any one of the audio control methods provided in the embodiments of the present disclosure.

Based on a conception identical or similar to the above embodiment, an embodiment of the present disclosure further provides a computer-readable storage medium storing a computer program, wherein when executed by a processor, the computer program performs a process of any one of the audio control methods provided in the embodiments of the present disclosure.

## Claims

1. An audio control method, comprising:
determining (101) a movement state parameter; wherein a position change of a user with respect to a terminal is obtained according to an audio signal acquired by a microphone, MIC, and a corresponding movement state parameter is determined according to the position change; and
performing (102) corresponding audio quality adjustment according to the movement state parameter;
**characterised in that**
the performing corresponding audio quality adjustment according to the movement state parameter comprises:
determining a current audio reception MIC when the terminal comprises a plurality of MICs for audio reception;
wherein the determining a current audio reception MIC comprises:
obtaining a Doppler shift corresponding to each audio reception MIC, and setting one or more MICs with a greatest Doppler shift as the current audio reception MIC; or
dividing the terminal into a plurality of charge measuring regions with each respective of the plurality of charge measuring regions corresponding to a different audio reception MIC; and determining a charge measuring region closest to a sound part of the user through charge measuring, and setting an audio reception MIC corresponding to a closest charge measuring region as the current audio reception MIC.

2. The audio control method according to claim 1, wherein before determining a movement state parameter, the method further comprises:
determining (110) whether an enabling condition of audio quality adjustment is satisfied, and performing a process of determining the movement state parameter if the enabling condition of the audio quality adjustment is satisfied.

3. The audio control method according to claim 2, wherein the enabling condition comprises at least one of the following conditions:
whether a control function of the audio quality adjustment is enabled;
whether a terminal state satisfies a triggering condition; and
whether a movement state satisfies the triggering condition.

4. The audio control method according to claim 2, wherein the enabling condition further comprises: detecting a change in current audio quality; and determining whether it is necessary to enable a corresponding audio state adjustment control according to an obtained position change and the change in the current audio quality;
wherein, it is determined that the enabling condition is not satisfied if information indicated by a position change parameter is that a position of the user with respect to the terminal stays unchanged while the change in an audio quality is detected; and it is determined that the enabling condition is satisfied if the information indicated by the position change parameter is that the position of the user with respect to the terminal changes while the change in the audio quality is detected.

5. The audio control method according to claim 1, wherein that a position change of a user with respect to a terminal is obtained comprises:
sending (121) a specific audio signal from a loudspeaker, and acquiring a corresponding specific audio signal by the MIC;
computing (122) a corresponding frequency change value of an acquired particular audio signal;
performing (123) filtering and extracting two or more frequency signals;
comparing (124) extracted frequency signals with a frequency value of a system model signal; and
determining (125) a user position change result according to a comparison result.

6. The audio control method according to claim 1, wherein a user state comprises a user movement state; and
the determining a movement state parameter comprises:
comparing an obtained position change result with a model set of a preset and stored typical movement state parameter to determine a matching movement state parameter.

7. The audio control method according to claim 6, wherein the movement state parameter comprises at least one of the following parameters:
a parameter indicating being away from a terminal while the user is speaking, a parameter indicating being close to the terminal while the user is speaking, a parameter indicating being away from the terminal while the user is listening, or a parameter indicating being close to the terminal while the user is listening;
a parameter indicating that a sound part of the user moves to a left, right, up or down with respect to the MIC; and
a parameter indicating that the user is close to one or more predetermined regions.

8. The audio control method according to claim 1, wherein the performing corresponding audio quality adjustment according to the movement state parameter comprises at least one of the following manners:
increasing a gain of audio reception according to an extent of being away, when a determined movement state parameter is a parameter indicating the user being away from the terminal while the user is speaking;
decreasing the gain of audio reception according to an extent of being close, when the determined movement state parameter is a parameter indicating the user being close to the terminal while the user is speaking;
increasing the gain of audio transmission according to an extent of being away, when the determined movement state parameter is a parameter indicating the user being away from the terminal while the user is listening;
decreasing the gain of audio transmission according to an extent of being close, when the determined movement state parameter is a parameter indicating the user being close to the terminal while the user is listening; and
switching an audio reception MIC to an MIC in a corresponding region, when the determined movement state parameter is a parameter indicating that a sound part of the user moves to a left, right, up or down with respect to the audio reception MIC.

9. The audio control method according to claim 1, wherein before performing corresponding audio quality adjustment, the method further comprises: acquiring network quality information; and
the performing corresponding audio quality adjustment further comprises:
performing corresponding audio quality adjustment according to a user state, comprising: increasing or decreasing a gain of audio reception according to a strength of a signal in the network quality information.

10. The audio control method according to claim 1, wherein before performing corresponding audio quality adjustment, the method further comprises: acquiring configuration information of a operation mode of a phone; and
the performing corresponding audio quality adjustment further comprises: increasing or decreasing a gain of audio reception according to a configuration corresponding to the phone mode.

11. The audio control method according to claim 1, wherein before the performing corresponding audio quality adjustment, the method further comprises:
determining whether an application scenario is virtual reality;
obtaining location information of a current speaker when it is determined that the application scenario is virtual reality;
the performing the corresponding audio quality adjustment further comprises: obtaining a loudspeaker corresponding to the location information, and switching the loudspeaker to be a current loudspeaker.

12. A terminal, comprising a memory, a processor and a computer program stored on the memory and operable by the processor, wherein the processor, when executes the computer program, performing a process of the method according to any one of claims 1 to 11.

13. A computer-readable storage medium, storing a computer program, wherein when executed by a processor, the computer program performs a process of the method according to any one of claims 1 to 11.

## Patentansprüche

1. Audiosteuerverfahren, das Folgendes umfasst:
Bestimmen (101) eines Bewegungszustandsparameters; wobei eine Positionsänderung eines Benutzers mit Bezug auf ein Endgerät gemäß einem Audiosignal erhalten wird, das von einem Mikrofon, MIC, erfasst wird, und ein entsprechender Bewegungszustandsparameter gemäß der Positionsänderung bestimmt wird; und
Durchführen (102) einer entsprechenden Audioqualitätsanpassung gemäß dem Bewegungszustandsparameter;
**dadurch gekennzeichnet, dass** das Durchführen einer entsprechenden Audioqualitätsanpassung gemäß dem Bewegungszustandsparameter Folgendes umfasst:
Bestimmen eines aktuellen Audioempfangs-MIC, wenn das Endgerät eine Vielzahl von MICs für den Audioempfang umfasst;
wobei das Bestimmen eines Audioempfangs-MIC Folgendes umfasst:
Erhalten einer Dopplerverschiebung, die jedem Audioempfangs-MIC entspricht, und Einstellen von einem oder mehreren MICs mit einer größten Dopplerverschiebung als das aktuelle Audioempfangs-MIC; oder
Teilen des Endgeräts in eine Vielzahl von Ladungsmessbereichen, wobei jeder jeweilige der Vielzahl von Ladungsmessbereichen einem anderen Audioempfangs-MIC entspricht; und Bestimmen eines Ladungsmessbereichs, der einem Klangteil des Benutzers am nächsten ist, durch Ladungsmessung und Einstellen eines Audioempfangs-MIC, das einem nächsten Ladungsmessbereich entspricht, als das aktuelle Audioempfangs-MIC.

2. Audiosteuerverfahren nach Anspruch 1, wobei das Verfahren vor dem Bestimmen eines Bewegungszustandsparameters ferner Folgendes umfasst:
Bestimmen (110), ob eine Aktivierungsbedingung der Audioqualitätsanpassung erfüllt ist, und Durchführen eines Prozesses des Bestimmens des Bewegungszustandsparameters, wenn die Aktivierungsbedingung der Audioqualitätsanpassung erfüllt ist.

3. Audiosteuerverfahren nach Anspruch 2, wobei die Aktivierungsbedingung mindestens eine der folgenden Bedingungen umfasst:
ob eine Steuerfunktion der Audioqualitätsanpassung aktiviert ist;
ob ein Endgerätezustand eine Auslösebedingung erfüllt; und
ob ein Bewegungszustand die Auslösebedingung erfüllt.

4. Audiosteuerverfahren nach Anspruch 2, wobei die Aktivierungsbedingung ferner Folgendes umfasst: Detektieren einer Änderung der aktuellen Audioqualität und Bestimmen, ob es gemäß einer erhaltenen Positionsänderung und der Änderung der aktuellen Audioqualität erforderlich ist, eine entsprechende Audiozustandsanpassungssteuerung zu aktivieren;
wobei bestimmt wird, dass die Aktivierungsbedingung nicht erfüllt ist, wenn Informationen, die von einem Positionsänderungsparameter angezeigt werden, besagen, dass eine Position des Benutzers mit Bezug auf das Endgerät unverändert bleibt, während die Änderung einer Audioqualität detektiert wird; und bestimmt wird, dass die Aktivierungsbedingung erfüllt ist, wenn die Informationen, die vom Positionsänderungsparameter angezeigt werden, besagen, dass sich die Position des Benutzers mit Bezug auf das Endgerät ändert, während die Änderung der Audioqualität detektiert wird.

5. Audiosteuerverfahren nach Anspruch 1, wobei, dass eine Positionsänderung eines Benutzers mit Bezug auf ein Endgerät erhalten wird, Folgendes umfasst:
Senden (121) eines spezifischen Audiosignals von einem Lautsprecher und Erfassen eines entsprechenden spezifischen Audiosignals durch das MIC;
Berechnen (122) eines entsprechenden Frequenzänderungswertes eines erfassten bestimmten Audiosignals;
Durchführen (123) des Filterns und des Extrahierens von zwei oder mehr Frequenzsignalen;
Vergleichen (124) von extrahierten Frequenzsignalen mit einem Frequenzwert eines Systemmodellsignals; und
Bestimmen (125) eines Benutzerpositionsänderungsergebnisses gemäß einem Vergleichsergebnis.

6. Audiosteuerverfahren nach Anspruch 1, wobei ein Benutzerzustand einen Benutzerbewegungszustand umfasst; und
das Bestimmen eines Bewegungszustandsparameters umfasst Folgendes:
Vergleichen eines erhaltenen Positionsänderungsergebnisses mit einem Modellsatz eines voreingestellten und gespeicherten typischen Bewegungszustandsparameters, um einen übereinstimmenden Bewegungszustandsparameter zu bestimmen.

7. Audiosteuerverfahren nach Anspruch 6, wobei der Bewegungszustandsparameter mindestens einen der folgenden Parameter umfasst:
einen Parameter, der das Entferntsein von einem Endgerät anzeigt, während der Benutzer spricht, einen Parameter, der das Nahsein am Endgerät anzeigt, während der Benutzer spricht, einen Parameter, der das Entferntsein vom Endgerät anzeigt, während der Benutzer zuhört, oder einen Parameter, der das Nahsein am Endgerät anzeigt, während der Benutzer zuhört;
einen Parameter, der anzeigt, dass sich ein Klangteil des Benutzers mit Bezug auf das MIC nach links, nach rechts, nach oben oder nach unten bewegt; und
einen Parameter, der anzeigt, dass sich der Benutzer in der Nähe von einem oder mehreren vorbestimmten Bereichen befindet.

8. Audiosteuerverfahren nach Anspruch 1, wobei das Durchführen einer entsprechenden Audioqualitätsanpassung gemäß dem Bewegungszustandsparameter mindestens eine der folgenden Arten umfasst:
Erhöhen einer Verstärkung des Audioempfangs gemäß einem Maß des Entferntseins, wenn ein bestimmter Bewegungszustandsparameter ein Parameter ist, der anzeigt, dass der Benutzer vom Endgerät entfernt ist, während der Benutzer spricht;
Verringern der Verstärkung des Audioempfangs gemäß einem Maß des Nahseins, wenn der bestimmte Bewegungszustandsparameter ein Parameter ist, der anzeigt, dass sich der Benutzer in der Nähe des Endgeräts befindet, während der Benutzer spricht;
Erhöhen der Verstärkung der Audiobertragung gemäß einem Maß des Entferntseins, wenn der bestimmte Bewegungszustandsparameter ein Parameter ist, der anzeigt, dass der Benutzer vom Endgerät entfernt ist, während der Benutzer zuhört;
Verringern der Verstärkung der Audioübertragung gemäß einem Maß des Nahseins, wenn der bestimmte Bewegungszustandsparameter ein Parameter ist, der anzeigt, dass sich der Benutzer in der Nähe des Endgeräts befindet, während der Benutzer zuhört; und
Schalten des Audioempfangs-MIC auf ein MIC in einem entsprechenden Bereich, wenn der bestimmte Bewegungszustandsparameter ein Parameter ist, der anzeigt, dass sich ein Klangteil des Benutzers mit Bezug auf das Audioempfangs-MIC nach links, nach rechts, nach oben oder nach unten bewegt.

9. Audiosteuerverfahren nach Anspruch 1, wobei das Verfahren vor dem Durchführen einer entsprechenden Audioqualitätsanpassung ferner Folgendes umfasst: Erfassen von Netzwerkqualitätsinformationen; und
das Durchführen einer entsprechenden Audioqualitätsanpassung umfasst ferner Folgendes:
Durchführen einer entsprechenden Audioqualitätsanpassung gemäß einem Benutzerzustand, das Folgendes umfasst: Erhöhen oder Verringern einer Verstärkung des Audioempfangs gemäß einer Stärke eines Signals in den Netzwerkqualitätsinformationen.

10. Audiosteuerverfahren nach Anspruch 1, wobei das Verfahren vor dem Durchführen einer entsprechenden Audioqualitätsanpassung ferner Folgendes umfasst: Erfassen von Auslegungsinformationen eines Betriebsmodus eines Telefons; und
das Durchführen einer entsprechenden Audioqualitätsanpassung umfasst ferner Folgendes: Erhöhen oder Verringern einer Verstärkung des Audioempfangens gemäß einer Auslegung, die dem Telefonmodus entspricht.

11. Audiosteuerverfahren nach Anspruch 1, wobei das Verfahren vor dem Durchführen einer entsprechenden Audioqualitätsanpassung ferner Folgendes umfasst:
Bestimmen, ob ein Anwendungsszenario virtuelle Realität ist;
Erhalten von Standortinformationen eines aktuellen Sprechers, wenn bestimmt wird, dass das Anwendungsszenario virtuelle Realität ist;
das Durchführen der entsprechenden Audioqualitätsanpassung umfasst ferner Folgendes: Erhalten eines Lautsprechers, der den Standortinformationen entspricht, und Schalten des Lautsprechers derart, dass er ein aktueller Lautsprecher ist.

12. Endgerät, das einen Speicher, einen Prozessor und ein Computerprogramm, das im Speicher gespeichert und vom Prozessor betreibbar ist, umfasst, wobei der Prozessor, wenn er das Computerprogramm ausführt, einen Prozess des Verfahrens nach einem der Ansprüche 1 bis 11 durchführt.

13. Computerlesbares Speichermedium, auf dem ein Computerprogramm gespeichert ist, wobei, wenn es von einem Prozessor ausgeführt wird, das Computerprogramm einen Prozess des Verfahrens nach einem der Ansprüche 1 bis 11 durchführt.

## Revendications

1. Procédé de commande audio, comprenant :
la détermination (101) d'un paramètre d'état de mouvement ; dans lequel un changement de position d'un utilisateur par rapport à un terminal est obtenu en fonction d'un signal audio acquis par un microphone, MIC, et un paramètre d'état de mouvement correspondant est déterminé en fonction du changement de position ; et
la réalisation (102) d'un ajustement de qualité audio correspondant en fonction du paramètre d'état de mouvement ;
**caractérisé en ce que**
la réalisation de l'ajustement de qualité audio correspondant en fonction du paramètre d'état de mouvement comprend :
la détermination d'une réception audio MIC actuelle lorsque le terminal comprend une pluralité de MIC pour une réception audio ;
dans lequel la détermination d'une réception audio MIC actuelle comprend :
l'obtention d'un décalage Doppler correspondant à chaque réception audio MIC, et le réglage d'un ou plusieurs MIC avec le plus grand décalage Doppler comme réception audio MIC actuelle ; ou
la division du terminal en une pluralité de régions de mesure de charge avec chacune respective de la pluralité de régions de mesure de charge correspondant à une réception audio MIC différente ; et la détermination d'une région de mesure de charge la plus proche d'une partie sonore de l'utilisateur par l'intermédiaire d'une mesure de charge, et le réglage d'une réception audio MIC correspondant à une région de mesure de charge la plus proche comme réception audio MIC actuelle.

2. Procédé de commande audio selon la revendication 1, dans lequel avant la détermination d'un paramètre d'état de mouvement, le procédé comprend en outre :
le fait de déterminer (110) si une condition d'activation d'un ajustement de qualité audio est satisfait, et la réalisation d'un processus de détermination du paramètre d'état de mouvement si la condition d'activation de l'ajustement de qualité audio est satisfaite.

3. Procédé de commande audio selon la revendication 2, dans lequel la condition d'activation comprend au moins une des conditions suivantes :
si une fonction de commande de l'ajustement de qualité audio est activée :
si un état de terminal satisfait une condition de déclenchement ; et
si un état de mouvement satisfait la condition de déclenchement.

4. Procédé de commande audio selon la revendication 2, dans lequel la condition d'activation comprend en outre : la détection d'un changement de qualité audio actuelle ; et le fait de déterminer s'il est nécessaire d'activer une commande d'ajustement d'état audio correspondante en fonction d'un changement de position obtenu et du changement de la qualité audio actuelle ;
dans lequel, il est déterminé que la condition d'activation n'est pas satisfaite si les informations indiquées par un paramètre de changement de position est qu'une position de l'utilisateur par rapport au terminal reste inchangée pendant que le changement d'une qualité audio est détecté ; et il est déterminé que la condition d'activation est satisfaite si les informations indiquées par le paramètre de changement de position est que la position de l'utilisateur par rapport aux changements de terminal change pendant que le changement de la qualité audio est détecté.

5. Procédé de commande audio selon la revendication 1, dans lequel le fait qu'un changement de position d'un utilisateur par rapport à un terminal soit obtenu comprend :
l'envoi (121) d'un signal audio spécifique à partir d'un haut-parleur, et l'acquisition d'un signal audio spécifique correspondant par le MIC ;
le calcul (122) d'une valeur de changement de fréquence correspondante d'un signal audio particulier acquis ;
la réalisation (123) d'une filtration et extraction de deux signaux de fréquence ou plus :
la comparaison (124) de signaux de fréquence extraits à une valeur de fréquence d'un signal modèle de système ; et
la détermination (125) d'un résultat de changement de position d'utilisateur en fonction d'un résultat de comparaison.

6. Procédé de commande audio selon la revendication 1, dans lequel un état d'utilisateur comprend un état de mouvement d'utilisateur ; et
la détermination d'un paramètre d'état de mouvement comprend :
la comparaison d'un résultat de changement de position obtenu à un ensemble de modèles d'un paramètre d'état de mouvement habituel préréglé et mis en mémoire pour déterminer un paramètre d'état de mouvement s'appariant.

7. Procédé de commande audio selon la revendication 6, dans lequel le paramètre d'état de mouvement comprend au moins un des paramètres suivants :
un paramètre indiquant l'éloignement par rapport à un terminal pendant que l'utilisateur parle, un paramètre indiquant la proximité par rapport au terminal pendant que l'utilisateur parle, un paramètre indiquant l'éloignement par rapport au terminal pendant que l'utilisateur écoute, ou un paramètre indiquant la proximité par rapport au terminal pendant que l'utilisateur écoute ;
un paramètre indiquant qu'une partie sonore de l'utilisateur se déplace à gauche, à droite, vers le haut ou vers le bas par rapport au MIC ; et
un paramètre indiquant que l'utilisateur est proche d'une ou plusieurs régions prédéterminées.

8. Procédé de commande audio selon la revendication 1, dans lequel la réalisation de l'ajustement de qualité audio correspondant en fonction du paramètre d'état de mouvement comprend au moins une des manières suivantes :
l'augmentation d'un gain de réception audio en fonction d'une importance de l'éloignement, lorsqu'un paramètre d'état de mouvement déterminé est un paramètre indiquant que l'utilisateur est éloigné du terminal pendant que l'utilisateur parle ;
la diminution du gain de réception audio en fonction d'une importance de la proximité, lorsque le paramètre d'état de mouvement déterminé est un paramètre indiquant que l'utilisateur est proche du terminal lorsque l'utilisateur parle ;
l'augmentation du gain de transmission audio en fonction d'une importance de l'éloignement, lorsque le paramètre d'état de mouvement déterminé est un paramètre indiquant que l'utilisateur est éloigné du terminal pendant que l'utilisateur écoute ;
la diminution du gain de transmission audio en fonction d'une importance de la proximité, lorsque le paramètre d'état de mouvement déterminé est un paramètre indiquant que l'utilisateur est proche du terminal pendant que l'utilisateur écoute ; et
le basculement d'une réception audio MIC vers un MIC dans une région correspondante, lorsque le paramètre d'état de mouvement déterminé est un paramètre indiquant qu'une partie son de l'utilisateur se déplace vers la gauche, la droite, le haut ou le bas par rapport à la réception audio MIC.

9. Procédé de commande audio selon la revendication 1, dans lequel avant la réalisation de l'ajustement de qualité audio correspondant, le procédé comprend en outre : l'acquisition d'informations de qualité de réseau ; et
la réalisation de l'ajustement de qualité audio correspondant comprend en outre :
la réalisation de l'ajustement de qualité audio correspondant en fonction d'un état d'utilisateur, comprenant : l'augmentation ou la diminution d'un gain de réception audio en fonction d'une force d'un signal dans les informations de qualité de réseau.

10. Procédé de commande audio selon la revendication 1, dans lequel avant la réalisation de l'ajustement de qualité audio correspondant, le procédé comprend en outre : l'acquisition d'informations de configuration d'un mode de fonctionnement d'un téléphone ; et
la réalisation de l'ajustement de qualité audio correspondant comprend en outre : l'augmentation ou la diminution d'un gain de réception audio en fonction d'une configuration correspondant au mode de téléphone.

11. Procédé de commande audio selon la revendication 1, dans lequel avant la réalisation de l'ajustement de qualité audio correspondant, le procédé comprend en outre :
le fait de déterminer si un scénario d'application est la réalité virtuelle ;
l'obtention d'informations d'emplacement d'un haut-parleur lorsqu'il est déterminé que le scénario d'application est la réalité virtuelle ;
la réalisation de l'ajustement de qualité audio correspondant comprend en outre : l'obtention d'un haut-parleur correspondant aux informations d'emplacement, et le basculement du haut-parleur pour qu'il soit un haut-parleur actuel.

12. Terminal, comprenant une mémoire, un processeur et un programme informatique stocké sur la mémoire et pouvant être mis en œuvre par le processeur, dans lequel le processeur, lorsqu'il exécute le programme informatique, réalise un processus du procédé selon l'une quelconque des revendications 1 à 11.

13. Support d'enregistrement lisible par ordinateur, stockant un programme informatique, dans lequel lorsqu'il est exécuté par un processeur, le programme informatique réalise un processus du procédé selon l'une quelconque des revendications 1 à 11.
